# EUROPÄISCHE PATENTANMELDUNG

(11) **EP 0 611 625 A1**
(43) Veröffentlichungstag der Anmeldung: **24.08.1994**
(21) Anmeldenummer: 94200288.2
(22) Anmeldetag: 03.02.1994
(51) Int. Cl.: B23K 3/08

(54) **Flux-Vorrichtung**

(30) Priorität: 15.02.1993 CH 451/93
(71) Anmelder: METEOR AG, CH-8604 Volketswil (CH)
(72) Erfinder: Arnold, Ernst, CH-8107 Buchs (CH); Höckh, Hartmut, D-72119 Ammerbuch 2 (DE)
(74) Vertreter: Schütz, Peter, Dipl.-Ing.

(57) **Zusammenfassung**

Um bei einer Flux - Vorrichtung mit einem Flussmittel enthaltenden Behälter eine zuverlässige Flussmittel-Benetzung der Verbindungsstellen der zu lötenden Anschlussstifte (42,42';44,44') mit Drahtenden der elektrischen Spulen (40) zu gewährleisten, ist eine federnde Aufhängung von muldenförmigen Bechern (20-1, 20-2) an einem Träger (28) eines Schöpflöffels (18) vorgesehen. Zwischen jedem Becher (20-1,20-2) und dem Träger (28) sind Druckfedern (26) vertikal angeordnet, wobei die muldenförmigen Becher (20-1,20-2) eine vorbestimmte Eintauchtiefe (e) aufweisen, die der Länge der zu lötenden Verbindungsstellen der Anschlussstifte (42,42';44,44') entspricht. Dadurch ist gewährleistet, dass auch bei auftretenden relativ grösseren Höhen-Toleranzen der elektrischen Spulen (40), insbesondere bei der Stifthöhe und/oder der Spulenaufnahmen die Verbindungsstellen höhengenau benetzt werden. Durch Andrücken der Becher (20-1 bzw.20-2) gegen die aus dem Spulenkörper nach unten herausragenden, beispielsweise zwei im Abstand zueinander angeordneten Anschlussstifte (42,42';44,44') stützt sich zuerst der längere Anschlussstift (42 bzw.44') gegen den Becherboden ab, wobei die Becher (20-1,20-2) in eine Schräglage (b1 : b2 bzw. b3 : b4) abkippen bis der zweite Anschlussstift (42' bzw.44) sich ebenfalls gegen den Becherboden abstützt, so dass beide Anschlussstifte (42,42' bzw.44,44') jeweils über die gleiche Höhe (Stifthöhe) verlässlich benetzt werden.

## Beschreibung

Die Erfindung betrifft eine Flux-Vorrichtung zur Vorbehandlung zu lötender Anschlussstiften mit daran anzulötenden Drahtenden an elektrischen Spulen, gemäss dem Oberbegriff des Patentanspruchs 1.

Bei bekannten Vorrichtungen dieser Art, wird die Lötstelle vor dem eigentlichen Verlöten der Anschlussstifte an elektrischen Spulen mit deren Drahtenden, mit einem Flussmittel vorbehandelt, wodurch die in einem weiteren Arbeitsvorgang nachfolgende Lötverbindung ermöglicht wird, indem die die Lötung beeinträchtigende Metalloxidschicht durch das Flussmittel zerstört wird. Mindestens eine unbewickelte Spule wird oberhalb der Flussmittel-Vorrichtung der sogenannten Flux-Vorrichtung in eine Halteposition gebracht. In den Flussmittel-Behälter der Tauchvorrichtung wird ein Schöpflöffel in das Flussmittel eingetaucht und mit Flussmittel aufgefüllt, danach gegen die nach unten ragenden Anschlussstifte der elektrischen Spulen derart angehoben, dass die Anschlussstifte bis zu einer vorbestimmten Höhe in das Flussmittel des Schöpflöffels eintauchen. Bei extrem kurzen Anschlussstiften und bei Spulen deren herausragende Anschlussstifte Höhenunterschiede aufweisen, ist eine gleichmässige Eintauchtiefe der Anschlussstifte in das Flussmitttelbad des Schöpflöffels nicht immer gewährleistet, so dass teilweise mit Flussmittel unbehandelte Lötstellen nicht vermieden werden können, wodurch beim nachfolgenden Verlöten durch Oxydbildung fehlerhafte Lötverbindungen entstehen können.

Es liegt daher der vorliegenden Erfindung die Aufgabe zugrunde, eine Verbesserung der Flux-Vorrichtung in Hinblick auf auftretende Höhen-Toleranzen der elektrischen Spulen, insbesondere bei der Höhe der Anschlussstifte und/oder der Spulenaufnahmen, zu ermöglichen und dadurch fehlerhafte Lötverbindungen zu vermeiden.

Die vorgenannte Aufgabe wird durch den kennzeichnenden Teil des Patentanspruchs 1 gelöst. Vorteilhafte Weiterbildungen des Erfindungsgegenstandes sind in den abhängigen Ansprüchen angegeben.

Durch die federnde Aufhängung von muldenförmigen Bechern am Träger des Schöpflöffels und durch vorbestimmte Eintauchtiefe der Bechermulden ist die Benetzung mit Flussmittel der zu lötenden Verbindungsstellen der nach unten aus den Spulenkörpern herausragenden Anschlussstifte auch bei relativ grösseren Höhenunterschieden gewährleistet, indem jeweils zuerst der längere Anschlussstift durch Andrücken des Bechers gegen die Spule sich am Boden der Bechermulde in einer vorbestimmten Eintauchtiefe abstützt und nachfolgend gegen den kürzeren Anschlussstift abkippt, so dass der Becher eine Schräglage einnimmt, bei welcher beide Anschlussstifte jeweils über die gleiche Länge (= Stifthöhe) benetzt werden.

Die Erfindung wird im folgenden anhand der Zeichnung an Ausführungsbeispielen näher erläutert.

Darin zeigen
Fig.1 einen Längsschnitt einer Flux-Vorrichtung mit einem Schöpflöffel in Ausgangsposition mit ausgezogenen Linien und strichliert gegen die elektrischen Spulen angehoben in Arbeitsposition dargestellt,
Fig.1A einen teilweisen Schnitt entlang der Linie A-A gemäss Fig.1, bezogen auf den Schöpflöffel, und
Fig.2 einen Längsschnitt und einen Grundriss einer gegenüber der Fig.1A abgewandelten Ausbildung des Schöpflöffels.

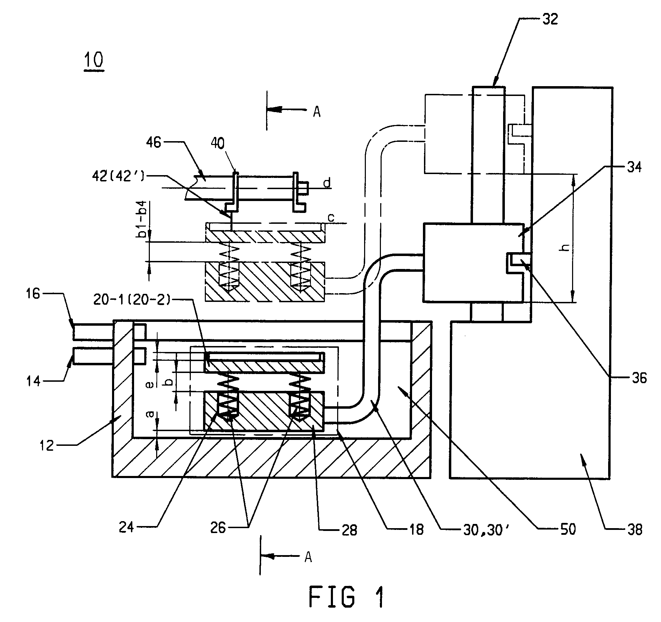

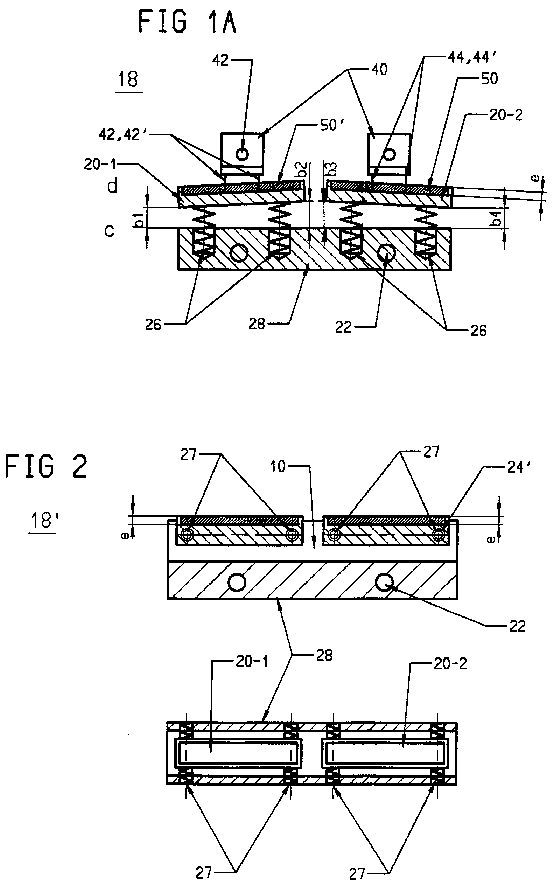

In den Fig.1 und 1A ist eine Flux-Vorrichtung mit der Bezugszahl 10 bezeichnet, die einen Behälter 12 mit einem Anschluss 14 für die Flussmittel-Zuführung und einen Ueberlauf-Anschluss 16 für die Flussmittel-Rückführung aufweist. Das Flussmittel 50 wird zwischen dem Flussmittel-Behälter 12 und einer zusätzlichen nicht dargestellten Aufbereitungsanlage ununterbrochen umgewälzt. Eine automatische Regulierung der Flussmitteldichte in der Aufbereitungsanlage gewährleistet, dass die Qualität des Flussmittels 50 während des Bertiebes konstant gehalten wird.

An einem, neben dem Flussmittel-Behälter 12 vertikal gelagerten Führungsgestänge 32 ist ein Halter 34 angeordnet, der mittels eines Mitnehmerbolzens 36 einer Hubvorrichtung 38 höhenverstellbar ist. Die Hubvorrichtung 38 kann pneumatisch oder elektrisch betrieben werden. Zur Feineinstellung eines Schöpflöffels 18 ist der Halter 34 gegenüber den elektrischen Spulen 40 in den X-,Y- und Z-Achsen einstellbar. Der Halter 34 ist mittels Haltestangen 30,30' mit an in den Flussmittel-Behälter 12 eintauchenden Schöpflöffel 18 in Aufnahmebohrungen 22,22' eines Trägers 28 fixiert. Der Schöpflöffel 18 besteht aus dem Träger 28, der mindestens einen abgefederten muldenförmigen Becher 20-1,20-2,... aufweist, wobei zwischen dem Träger 28 und jedem Becher 20-1,20-2,... beispielsweise zwei Druckfedern 26 über die Länge der Bechermulde im Abstand zueinander in Bohrungen 24 vertikal angeordnet sind. Gemäss der Fig.1 und 1A könnten auch für jeden Becher 20-1,20-2,... vier Druckfedern 26 im Abstand zueinander angeordnet sein, was insbesondere bei grösseren Spulen 40 von Vorteil ist, wobei auch nur eine mittig im Schwerpunkt der Bechermulde(nicht dargestellt) angeordnete Druckfeder 26 angeordnet sein könnte. Die Bechermulden weisen eine vorbestimmte Eintauchtiefe e auf, die der Lötstellen-Länge der Anschlussstifte 42,42';44,44',... der Spule 40 entspricht. Bei einem Minimalabstand a zwischen dem Schöpflöffel 18 und dem Boden des Flussmittel-Behälters 12 befindet sich der Schöpflöffel 18 in seiner Ausgangsposition, wobei eine Berührung des Schöpflöffels 18 mit dem Boden des Behälters 12 zu vermeiden ist.

Im unbelasteten Zustand der Druckfedern 26 besteht zwischen dem Träger 28 und jeder Bechermulde 20-1,20-2,... ein Zwischenraum b. Aus der Ausgangsposition a wird der Schöpflöffel 18 bis zum Lötpunkt zwischen den Anschlussstiften 42,42';44,44',... in seine Fluxposition c (mit strichlierten Linien dargestellt) durch einen Hub h angehoben und gegen die in Halteposition d zur Vorbehandlung positionierten elektrischen Spulen 40 derart gehalten, dass die Anschlussstifte 42,42';44,44';... gegen die anhebbaren Becher 20-1,20-2,... nach unten herausragen. Die muldenförmigen Becher 20-1,20-2,... des Schöpflöffels 18 sind mit Flussmittel-Teilmengen 50' vorbestimmter Eintauchtiefe e aufgefüllt. Die Benetzung der Anschlussstifte 42,42';44,44';... der weiteren elektrischen Spulen 40 erfolgt mit kürzeren (nicht dargestellten) Eintauch-Hüben hx, bei welchen die muldenförmigen Becher 20-1,20-2,... jeweils knapp unterhalb der Flussmittel-Oberfläche eingetaucht werden. Nachfolgend werden die in vorbestimmter Eintauchtiefe e mit Flussmittel 50' gefüllten Becher 20-1,20-2,... gegen die Anschlussstifte 42,42';44,44';... angehoben. Falls die Höhe der herausragenden Anschlussstifte 42,42';44,44';... unterschiedlich lang sind, stösst zuerst beim Andrücken des Bechers 20-1, 20-2,... der längere Anschlussstift gegen den Boden des muldenförmigen Bechers 20-1,20-2,..., beispielsweise gemäss der Fig.1A der Anschlussstift 42 gegen die Bechermulde 20-1 bzw. der Anschlussstift 44' gegen die Bechermulde 20-2 und die entsprechenden Druckfedern 26 werden zusammengedrückt, so dass die Zwischenräume zwischen dem Träger 28 und der Bechermulde 20-1 bzw.20-2 den Wert b1 bzw.b4 erreichen. Die Druckfedern 26 drücken weiter gegen die Bechermulden 20-1,20-2,... bis diese abkippen und deren Böden schräg an die kürzeren Anschlussstifte 42'(b2) bzw.44(b3) anstossen, so dass auch diese Anschlussstifte in voller Löthöhe mit Flussmittel 50' benetzt werden. Derartig vorbehandelte Lötstellen gewährleisten eine einwandfreie nachfolgende Lotauflage.

In Fig.2 ist ein gegenüber den Fig.1 und 1A abgewandelter Schöpflöffel 18' dargestellt, bei welchem zwischen dem Träger 28 und den muldenförmigen Bechern 20-1,20-2,... anstelle vertikal angeordneter Druckfedern 26 horizontal quer zum Träger 28 im Abstand zueinander angeordnete Federn 27 vorgesehen sind, die in teilweise vorkommenden Fällen gegen ein seitliches Verschieben der Becher 20-1, 20-2,... vorteilhaft sind.

Die durch horizontal verlaufende Bohrungen 24' der Becher 20-1,20-2,... geführten Federn 27 sind beidseitig im Träger 28 angeordnet.

Die Bechermulden 20-1,20-2,... mit unterschiedlichen Eintauchtiefen e für die Flussmittel-Teilmengen 50' sind austauschbar ausgebildet, entsprechend der Anordnung und Grösse der zu behandelten Anschlussstifte 42,42'; 44,44';... unterschiedlicher Spulen 40, wobei diese Stifte radial oder axial (nicht dargestellt) aus den Spulenkörpern herausragen können.

## Patentansprüche

1. Flux-Vorrichtung mit einem ein Flussmittel (50) enthaltenden Behälter (12) und einem relativ zu diesem über ein Führungsgestänge (32) und einen Halter (34) mit Haltestangen (30,30') höhenverstellbaren in das Flussmittel (50) des Behälters (12) eintauchenden Schöpflöffel (18,18') und zur Aufnahme einer Teilmenge (50') des Flussmittels (50) zur Benetzung der Verbindungsstellen gegen die zu lötenden Anschlussstifte (42,42'; 44,44';...) mit Drahtenden elektrischer Spulen (40) anhebbar ausgebildet ist, dadurch gekennzeichnet, dass für mindestens eine Teilmenge (50') des Flussmittels (50) der Schöpflöffel (18,18') einen Träger (28) für mindestens einen muldenförmigen Becher (20-1,20-2,...) aufweist und zwischen jedem Becher (20-1,20-2,...) und dem Träger (28) Druckfedern (26,27) angeordnet sind und eine vorbestimmte Höhe der zu lötenden Anschlussstifte (42,42';44,44';...) in die Teilmenge(n) (50') des Flussmittels (50) der federnd gelagerten Bechermulden eintauchen, wobei eine vorbestimmte Eintauchtiefe (e) in den Bechern (20-1,20-2,...) der Länge der zu lötenden Verbindungsstellen der Anschlussstifte (42,42';44,44';...) entspricht.

2. Vorrichtung nach Anspruch 1, dadurch gekennzeichnet, dass mindestens zwei Druckfedern (26) zwischen jedem Becher (20-1,20-2,...) und dem Träger (28) des Schöpflöffels (18) längs jedes Bechers (20-1,20-2,...) im Abstand zueinander vertikal angeordnet sind. (Fig.1,1A)

3. Vorrichtung nach Anspruch 1, dadurch gekennzeichnet, dass zwischen jedem Becher (20-1,20-2,...) und dem Träger (28) des Schöpflöffels (18) im Schwerpunkt der kippbaren Bechermulde (20-1,20-2,...) eine Druckfeder (16) vertikal angeordnet ist.

4. Vorrichtung nach Anspruch 1, dadurch gekennzeichnet, dass mindestens zwei Federn (27) zwischen jedem Becher (20-1,20-2,...) und dem Träger (28) des Schöpflöffels (18') längs jedes Bechers (20-1,20-2,...) im Abstand zueinander horizontal jeweils quer zur Trägerlänge (28) angeordnet sind. (Fig.2)
